# EUROPEAN PATENT SPECIFICATION

(11) **EP 4 474 180 B1**
(45) Date of publication and mention of the grant of the patent: **05.11.2025**
(21) Application number: 23178046.1
(22) Date of filing: 07.06.2023
(51) Int. Cl.: B60G 13/00

(54) **A SUSPENSION FORK FOR A VEHICLE SUSPENSION**
FEDERGABEL FÜR EINE FAHRZEUGAUFHÄNGUNG
FOURCHE DE SUSPENSION POUR UNE SUSPENSION DE VÉHICULE

(43) Date of publication of application: 11.12.2024
(73) Proprietor: Volvo Car Corporation, 405 31 Göteborg (SE)
(72) Inventor: WEGLIN, Joakim, 40531 Göteborg (SE); GILFÄR, Sam, 40531 Göteborg (SE); HANSSON, Niklas, 40531 Göteborg (SE)
(74) Representative: Maiwald GmbH

(56) References cited:
- DE-A1- 102011 112 714
- US-B2- 11 230 154

## Description

The present disclosure relates to a suspension fork for a vehicle suspension and a vehicle suspension.

Usually, suspension forks for vehicle suspensions have one or two permanently attached legs. A suspension fork with two legs has a good stiffness-to-weight ratio, but makes the mounting and demounting of the drive shaft of the vehicle suspension difficult. A one-legged suspension fork, however, is heavier but with better access to the drive shaft. The document US11230154B2 discloses a known suspension fork for a vehicle suspension.

The above problem is at least partially solved or alleviated by the subject matter of the independent claims of the present disclosure, wherein further examples are incorporated in the dependent claims.

According to a first aspect of this disclosure, there is provided a suspension fork for a vehicle suspension, the suspension fork comprising: an attachment portion configured for attachment to a damper of the vehicle suspension, a first leg, the first leg having a first end attached to the attachment portion and a second end configured for attachment to a control arm of the vehicle suspension, and a second leg, the second leg having a first end configured for releasable attachment to the attachment portion and a second end configured for releasable attachment to the control arm, the first leg and the second leg being spaced apart from one another for insertion of a drive shaft of the vehicle suspension through a space formed between the two legs.

The suspension fork according to the first aspect of this disclosure combines the good stiffness-to-weight-ratio of a suspension forks with two legs with an easy mounting and demounting of the drive shaft provided by means of the releasable attachment of the second leg to the control arm and the attachment portion. Further, with the described design of the suspension fork, the suspension fork can be kept very close to the drive shaft itself when mounted. This enables a very straight load path between the damper and the control arm. This further gives an opportunity to optimize weight of the suspension fork without any additional constraints but the packaging towards the drive shaft in the mounted condition.

The suspension fork may provide for a confinement of the drive shaft. This confinement may be formed by two legs with the space for the drive shaft formed in between. Accordingly, the drive shaft may be surrounded by the two legs, the two legs opposing each other and having the drive shaft in between them in the mounted condition.

The suspension fork may be in an assembled or an unassembled condition. In the assembled condition, the respective components of the suspension fork, such as the attachment portion and the leg, which are configured for attachment to each other, may be attached to each other. In the unassembled condition, the respective components of the suspension fork, which are configured for attachment to each other, may not or not entirely be attached to each other. Accordingly, the term configured for attachment includes the two cases where the respective components are attached or attachable to each other as provided for by means of their configuration. The configuration for attachment may be provided for as described below. For example, each one of the respective components to be attached to each other may have an attachment means, such as a through-hole, both attachment means corresponding to each other for attachment of the respective components to each other. A further attachment means, such as a screw, may be provided to attach both components to each other.

Similarly, the vehicle suspension may have a mounted and unmounted condition. In the mounted condition, the respective components of the vehicle suspension, may be mounted to each other and/or positioned relative to each other in a defined manner. In the unmounted condition, the respective components of the vehicle suspension, may yet need to be mounted to each other and/or positioned relative to each other.

A releasable attachment as mentioned herein refers to an attachment which may be released or, in other words, detached, in particular without destruction and/or repetitively attached and released. The releasable attachment is the opposite of a permanent, or in other words, fixed attachment, where the respectively connected components may not be released or detached from each other, at least not without destructive methods. The releasable attachment of the second leg to the attachment portion and the control arm has the advantage that it may be easily assembled after mounting of the vehicle suspension, e.g., for positioning of the drive shaft in the space between the two legs. Also, it is convenient to service the vehicle suspension or suspension fork when the second leg can be easily detached from the attachment portion and the control arm.

The second leg may be configured for releasable attachment to the attachment portion by means of a first through-hole of the attachment portion and a first screw configured to be fastened inside the first through-hole. This enables a simple yet effective releasable attachment, which may be fastened with widely available screwing tools. Moreover, it may be provided that the first screw acts as a rotation axis such that the second leg can be rotated at the rotation axis. This may facilitate the release or detachment of the second end from the control arm such that the attachment of the second leg to the attachment portion must not entirely be released for removing the drive shaft from the space between the two legs.

The first end of the second leg may comprise two second arms, the second arms being spaced apart from one another and each one having a second through-hole therein for insertion of the first screw there through. This enables a design in which a section of the attachment portion having the first through-hole may be positioned between the spaced formed between the two second arms of the second leg. The first screw securing both second arms by their second through-holes provides for a particularly secure attachment of the second leg to the attachment portion.

The attachment portion may comprise a first bulge having the first through-hole, the first bulge being configured for being fitted into the space between the two second arms. Having the section of the attachment portion with the first through-hole designed as a first bulge at the attachment portion provides for a low-weight design of the suspension fork while still having sufficient stiffness at the required section for providing a secure attachment. A bulge as described herein may be generally understood as a section sticking out from a component or its overall shape, in particular of a clamp of the attachment portion as described further below, and may have a round shape. For example, the attachment portion may generally have a section having a cylindrical shape, in particular a ring shape, which may form a clamp, the first bulge adding to that general shape of that section of the attachment portion a section sticking out of that shape.

The attachment portion may comprise a clamp for the damper. In particular, the attachment portion may be designed as a clamp. It may have a generally cylindrical or ring-like shape, which may have a slit interrupting the shape or, in other words, dividing the clamp. The attachment portion can be widened and tightened in diameter by increasing and decreasing the size of the slit through substantially elastic deformation of the clamp to receive the damper therein.

The clamp may be configured to be tightened when the first screw is fastened inside the first through-hole. Conveniently, the first bulge may extend over the slit such that by fastening the first screw, the slit may be closed and the damper is locked inside of the attachment portion.

The first leg may be permanently attached to the attachment portion. This has the advantage that the first leg is very securely attached and the attachment may be provided very cost-effective and with relatively little weight compared to a releasable attachment, where typically additional material and/or components are required. For example, it is possible to design the attachment portion and the first leg as one piece.

Each one of the second ends of the two legs may comprise a third through-hole for attaching the two legs at their second ends to the control arm by means of a second screw. Accordingly, both second ends of the two legs may be conveniently fastened by a single second screw, reducing the weight of the suspension fork further by not requiring any further fastening means.

The second end of the second leg may have a second bulge through which its third through-hole extends. This provides for the possibility to design a thinner second leg than is required or advantageous at the section of the second end of the second leg for the third through-hole to establish a secure attachment. This further reduces the weight of the suspension fork without reducing the capabilities of the suspension fork.

The second end of the first leg may comprise two first arms, which are spaced apart from one another. This allows for a secure attachment of the second end of the first leg to the control arm, in particular by means of the second screw.

The second end of the first leg may have an h-shaped profile being formed by the first arms. The h-shaped profile provides for a light-weight and high-stiffness design of the second of the first leg.

The space between the two first arms may be designed such that the control arm is configured to be inserted in between the two first arms. Configured to be inserted means that the control arm may be inserted between the first arms or it may be provided to be inserted between the first arms. This enables a design of the first leg having a particularly secure attachment to the control arm by means of the two first arms and at opposite sides of the control arm.

The second end of the second leg may be located adjacent to one of the two first arms when the second leg is attached to the control arm. In particular, the second end of the second leg may be located directly adjacent or at one of the two first arms when the second leg is attached to the control arm. Thereby, one of the two first arms together with the second end of the second leg are, in particular by means of the second screw, securely attached to the control arm.

One first arm of the two first arms being located adjacent to the second leg may be smaller in thickness than the other first arm of the two first arms. Thereby, the first arm of the second leg that is located opposite of the second leg may be provided with a greater thickness and thus high stiffness, while the other first arm may be provided with a smaller thickness and stiffness because it is being supported by the second leg. This provides a secure yet light-weight attachment of the first leg to the control arm.

According to a second aspect, there is provided a vehicle suspension comprising a suspension fork according to the first aspect of this disclosure, a damper attached to the attachment portion of the suspension fork, a control arm attached to the two legs of the suspension fork and a drive shaft extending in length through the space between the two legs.

It is noted that the above aspects, examples and features may be combined with each other irrespective of the aspect involved.

The above and other aspects of the present disclosure will become apparent from and elucidated with reference to the examples described hereinafter.

Examples of the disclosure will be described in the following with reference to the following drawings illustrating:
- Fig. 1: a perspective view on a vehicle suspension in a mounted condition,
- Fig. 2: a perspective view on the vehicle suspension of Fig. 1 in an unmounted condition, and
- Fig. 3: a cross-sectional view on the vehicle suspension of Fig. 1.

The figures are merely schematic representations and serve only to illustrate examples of the disclosure. Identical or equivalent elements are in principle provided with the same reference signs.

The designation of components such as legs, ends, arms, screws, etc. as first, second, third etc. as provided herein is merely intended to make the respective components referenceable and distinguishable from one another. By no means does the designation of the herein described components constitute a limitation of the scope of this disclosure. For example, when this disclosure describes a second screw, a first screw does not need to be present unless it is explicitly being referred to as being required per se or non-optional.

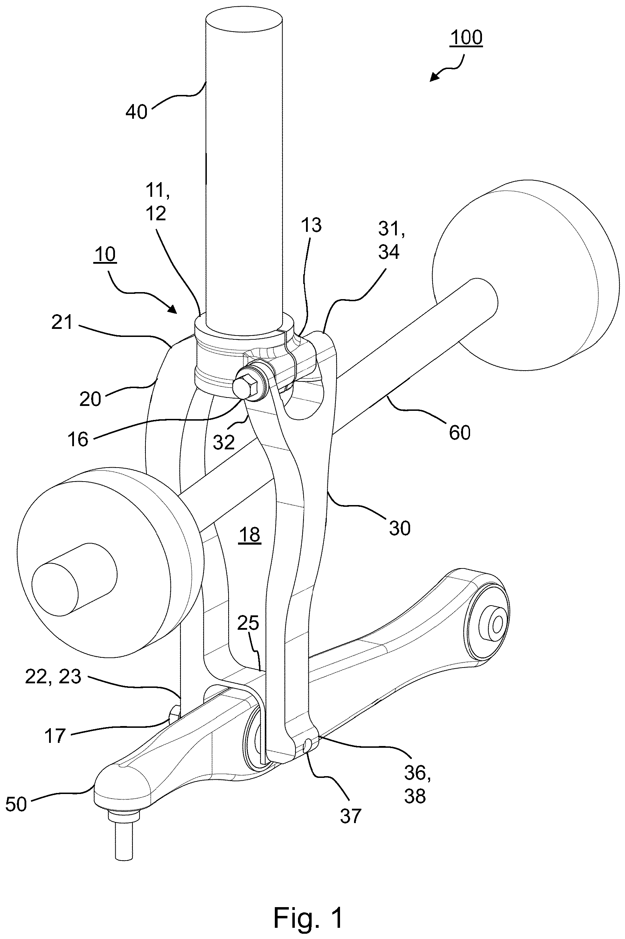

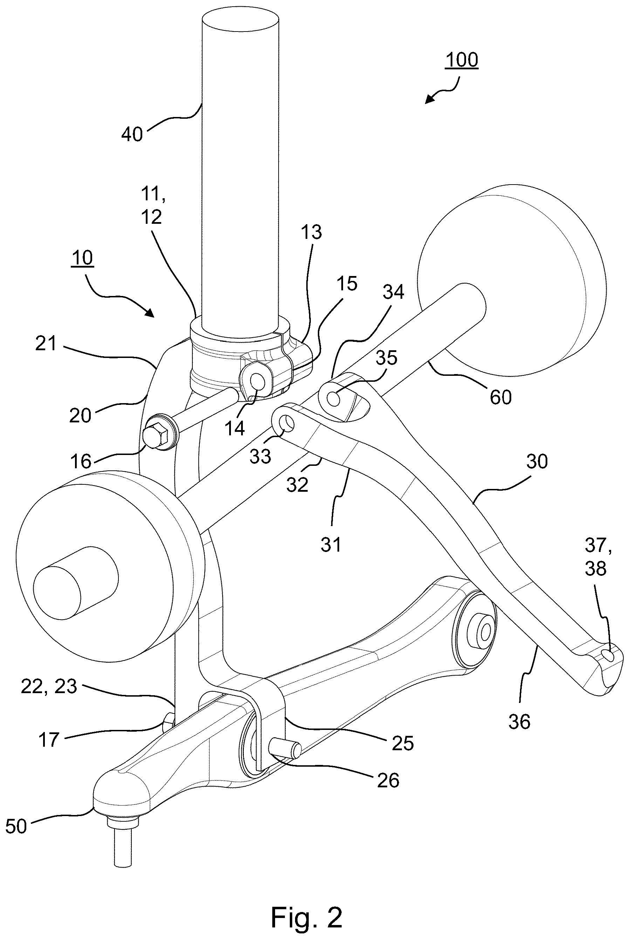

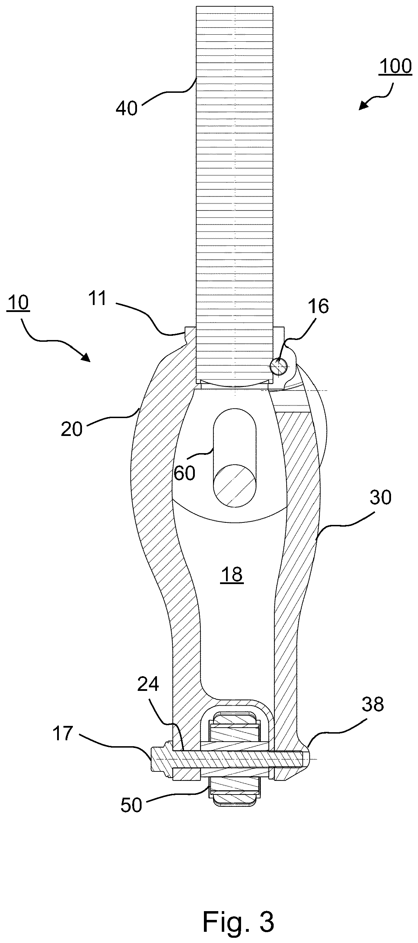

Figures 1 to 3 illustrate a vehicle suspension 100 having a suspension fork 10 from different views and in a mounted condition (Fig. 1, 3) and unmounted condition (Fig. 2). The illustrated suspension fork 10 has a design combining light-weight and assembly advantages as will be explained further below.

Besides the suspension fork 10, the vehicle suspension 100 comprises a damper 40 attached to the suspension fork 10 and a lower control arm 50 attached to the suspension fork 10 in the mounted condition of Fig. 1. Further, a drive shaft 60 of the vehicle suspension 100 is extending through a space 18 formed between two legs 20, 30 of the suspension fork 10.

The first leg 20 of the suspension fork 10 is permanently attached at its first end 21 to an attachment portion 11 of the suspension fork 10. The first leg 20 is further releasably attached to the control arm 50 at its second end 22. The attachment portion 11 is configured for releasable attachment to the damper 40.

In this example, the attachment portion 11 comprises a clamp 12 and a first bulge 13 extending in length over a slit 15 dividing the clamp 12 and the first bulge 13. The clamp 12 has a cylindrical or ring-like shape corresponding to the outer shape of the damper 40. The clamp 12 may have an inner diameter substantially corresponding to the outer diameter of the damper 40. The first bulge 13 comprises a first through-hole 14 extending along the length of the first bulge 13. A first screw 16 may be inserted through the first through-hole 14 and fastened therein to tighten the clamp 12, thereby releasably attaching the damper 40 to the attachment portion 11.

A first end 31 of the second leg 30 is divided into two second arms 32, 34, having a space (not denominated) in between. The second arms 32, 34 and the size of the space, in particular the distance between both second arms 32, 34, are designed such that the first bulge 13 may be fitted, in particular form-fitted, with its first through-hole 14 in the space between the two second arms 32, 34. Each one of the two second arms 32, 34 comprises a second through-hole 33, 35, which may be aligned with the first through-hole 14 when the two second arms 32, 34 are fitted on the first bulge 13. Any or all of the first through-hole 14 and the second through-holes 33, 35 may have an inner threading corresponding to an outer threading of the first screw 16 such that the first screw 16 may be fastened through the respective threadings. The first screw 16 may be inserted inside of the first through-hole 14 and the second through-holes 33, 35, not only to attach the damper 40 to the attachment portion 11 but further to releasably attach the first end 31 of the second leg 30 to the attachment portion 11.

The second end 36 of the second leg 30 is configured for releasable attachment to the control arm 50, which may be seen attached in Fig. 1 and detached in Fig. 2. For this purpose, the second end 36 comprises a second bulge 38, through which a third through-hole 37 extends. The third through-hole 37 may be aligned with a through-hole (not denominated) inside of the control arm 50 and third through-holes 24, 26 of the second end 22 of the first leg 20. Any or all of the third through-holes 24, 26, 37 and the through-hole inside of the control arm 50 may have an inner threading corresponding to an outer threading on the second screw 17, which is seen in Fig. 1 and 3 as fastening the two legs 20, 30 to the control arm 50.

The second end 22 of the first leg 20 has two first arms 23, 25, each one of these having one of the third through-holes 24, 26 of the first leg 20. The second end 22 may be seen with a substantially h-shaped profile in the cross-sectional view of the vehicle suspension 100 of Fig. 3. The first arm 23 is designed with greater thickness than the first arm 25.

As may be taken from Fig. 3 in particular, the drive shaft 60 may be easily mounted in the vehicle suspension 100 by introducing it into the space 18 between the two legs 20, 30 first and afterwards releasably attaching the second leg 30 to the attachment portion 11 and the control arm 50. Similarly, it is easy to demount the drive shaft 60 by releasing the second leg 30 from the attachment portion 11 and/or the control arm 50.

Other variations to the disclosed examples can be understood and effected by those skilled in the art in practicing the claimed disclosure, from the study of the drawings, the disclosure, and the appended claims. In the claims the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: suspension fork
- 11: attachment portion
- 12: clamp
- 13: first bulge
- 14: first through-hole
- 15: slit
- 16: first screw
- 17: second screw
- 18: space
- 20: first leg
- 21: first end
- 22: second end
- 23, 25: first arm
- 24, 26: third through-hole
- 30: second leg
- 31: first end
- 32, 34: second arm
- 33, 35: second through-hole
- 36: second end
- 37: third through-hole
- 38: second bulge
- 40: damper
- 50: control arm
- 60: drive shaft
- 100: vehicle suspension

## Claims

1. A suspension fork (10) for a vehicle suspension (100), the suspension fork (10) comprising:
- an attachment portion (11) configured for attachment to a damper (40) of the vehicle suspension (100),
- a first leg (20), the first leg (20) having a first end (21) attached to the attachment portion (11) and a second end (22) configured for attachment to a control arm (50) of the vehicle suspension (100), and
- a second leg (30), the second leg (30) having a first end (31) configured for releasable attachment to the attachment portion (11) and a second end (36) configured for releasable attachment to the control arm (50),
the first leg (20) and the second leg (30) being spaced apart from one another for insertion of a drive shaft (60) of the vehicle suspension (100) through a space (18) formed between the two legs (20, 30).

2. The suspension fork (10) according to claim 1, the second leg (30) being configured for releasable attachment to the attachment portion (11) by means of a first through-hole (14) of the attachment portion (11) and a first screw (16) configured to be fastened inside the first through-hole (14).

3. The suspension fork (10) according to claim 2, the first end (31) of the second leg (30) comprising two second arms (32, 34), the second arms (32, 34) being spaced apart from one another and each one having a second through-hole (33, 35) therein for insertion of the first screw (16) there through.

4. The suspension fork (10) according to claim 3, the attachment portion (11) comprising a first bulge (13) having the first through-hole (14), the first bulge (13) being configured for being fitted into the space between the two second arms (32, 34).

5. The suspension fork (10) according to any of the previous claims, the attachment portion (11) comprising a clamp (12) for the damper (40).

6. The suspension fork (10) according to any of claims 2 to 4 and according to claim 5, the clamp (12) being configured to be tightened when the first screw (16) is fastened inside the first through-hole (14).

7. The suspension fork (10) according to any of the previous claims, the first leg (20) being permanently attached to the attachment portion (11).

8. The suspension fork (10) according to any of the previous claims, each one of the second ends (22, 36) of the two legs (20, 30) comprising a third through-hole (24, 26, 37) for attaching the two legs (20, 30) at their second ends (22, 36) to the control arm (50) by means of a second screw (17).

9. The suspension fork (10) according to claim 8, the second end (36) of the second leg (30) having a second bulge (38) through which its third through-hole (37) extends.

10. The suspension fork (10) according to any of the previous claims, the second end (22) of the first leg (20) comprising two first arms (23, 25), which are spaced apart from one another.

11. The suspension fork (10) according to claim 10, the second end (22) of the first leg (20) having an h-shaped profile being formed by the first arms (23, 25).

12. The suspension fork (10) according to claim 10 or 11, the space between the two first arms (23, 25) being designed such that the control arm (50) is configured to be inserted in between the two first arms (23, 25).

13. The suspension fork (10) according to any of claims 10 to 12, the second end (36) of the second leg (30) being located adjacent to one of the two first arms (23, 25) when the second leg (30) is attached to the control arm (50).

14. The suspension fork (10) according to any of claims 10 to 13, one first arm (25) of the two first arms (23, 25) being located adjacent to the second leg (30) being smaller in thickness than the other first arm (23) of the two first arms (23, 25).

15. A vehicle suspension (100) comprising a suspension fork (10) according to any of the previous claims, a damper (40) attached to the attachment portion (11) of the suspension fork (10), a control arm (50) attached to the two legs (20, 30) of the suspension fork (10) and a drive shaft (60) extending in length through the space (18) between the two legs (20, 30).

## Patentansprüche

1. Aufhängungsgabel (10) für eine Fahrzeugaufhängung (100), wobei die Aufhängungsgabel (10) umfasst:
- einen Befestigungsabschnitt (11), der zur Befestigung an einem Dämpfer (40) der Fahrzeugaufhängung (100) konfiguriert ist,
- einen ersten Schenkel (20), wobei der erste Schenkel (20) ein erstes Ende (21), das an dem Befestigungsabschnitt (11) angebracht ist, und ein zweites Ende (22) aufweist, das zur Befestigung an einem Steuerarm (50) der Fahrzeugaufhängung (100) konfiguriert ist, und
- einen zweiten Schenkel (30), wobei der zweite Schenkel (30) ein erstes Ende (31), das zur lösbaren Befestigung an dem Befestigungsabschnitt (11) konfiguriert ist, und ein zweites Ende (36), das zur lösbaren Befestigung an dem Steuerarm (50) konfiguriert ist, aufweist,
wobei der erste Schenkel (20) und der zweite Schenkel (30) voneinander beabstandet sind, um eine Antriebswelle (60) der Fahrzeugaufhängung (100) durch einen zwischen den beiden Schenkeln (20, 30) gebildeten Zwischenraum (18) einführen zu können.

2. Aufhängungsgabel (10) nach Anspruch 1, wobei der zweite Schenkel (30) zur lösbaren Befestigung an dem Befestigungsabschnitt (11) mittels eines ersten Durchgangslochs (14) des Befestigungsabschnitts (11) und einer ersten Schraube (16) ausgebildet ist, die zur Befestigung innerhalb des ersten Durchgangslochs (14) ausgebildet ist.

3. Aufhängungsgabel (10) nach Anspruch 2, wobei das erste Ende (31) des zweiten Schenkels (30) zwei zweite Arme (32, 34) umfasst, wobei die zweiten Arme (32, 34) voneinander beabstandet sind und jeweils ein zweites Durchgangsloch (33, 35) aufweisen, durch das die erste Schraube (16) eingeführt werden kann.

4. Aufhängungsgabel (10) nach Anspruch 3, wobei der Befestigungsabschnitt (11) eine erste Ausbuchtung (13) mit dem ersten Durchgangsloch (14) aufweist, wobei die erste Ausbuchtung (13) so gestaltet ist, dass sie in den Raum zwischen den beiden zweiten Armen (32, 34) eingepasst werden kann.

5. Aufhängungsgabel (10) nach einem der vorhergehenden Ansprüche, wobei der Befestigungsabschnitt (11) eine Klemme (12) für den Dämpfer (40) aufweist.

6. Aufhängungsgabel (10) nach einem der Ansprüche 2 bis 4 und nach Anspruch 5, wobei die Klemme (12) so konfiguriert ist, dass sie festgezogen wird, wenn die erste Schraube (16) in der ersten Durchgangsbohrung (14) befestigt ist.

7. Aufhängungsgabel (10) nach einem der vorhergehenden Ansprüche, wobei der erste Schenkel (20) dauerhaft mit dem Befestigungsabschnitt (11) verbunden ist.

8. Aufhängungsgabel (10) nach einem der vorhergehenden Ansprüche, wobei jedes der zweiten Enden (22, 36) der beiden Schenkel (20, 30) ein drittes Durchgangsloch (24, 26, 37) aufweist, um die beiden Schenkel (20, 30) an ihren zweiten Enden (22, 36) mittels einer zweiten Schraube (17) an dem Steuerarm (50) zu befestigen.

9. Aufhängungsgabel (10) nach Anspruch 8, wobei das zweite Ende (36) des zweiten Schenkels (30) eine zweite Ausbuchtung (38) aufweist, durch die sich seine dritte Durchgangsbohrung (37) erstreckt.

10. Aufhängungsgabel (10) nach einem der vorhergehenden Ansprüche, wobei das zweite Ende (22) des ersten Schenkels (20) zwei erste Arme (23, 25) aufweist, die voneinander beabstandet sind.

11. Aufhängungsgabel (10) nach Anspruch 10, wobei das zweite Ende (22) des ersten Schenkels (20) ein h-förmiges Profil aufweist, das durch die ersten Arme (23, 25) gebildet wird.

12. Aufhängungsgabel (10) nach Anspruch 10 oder 11, wobei der Zwischenraum zwischen den beiden ersten Schenkeln (23, 25) so ausgebildet ist, dass der Steuerarm (50) zum Einschieben zwischen die beiden ersten Schenkel (23, 25) ausgebildet ist.

13. Aufhängungsgabel (10) nach einem der Ansprüche 10 bis 12, wobei das zweite Ende (36) des zweiten Schenkels (30) benachbart zu einem der beiden ersten Arme (23, 25) angeordnet ist, wenn der zweite Schenkel (30) an dem Steuerarm (50) befestigt ist.

14. Aufhängungsgabel (10) nach einem der Ansprüche 10 bis 13, wobei ein erster Arm (25) der beiden ersten Arme (23, 25), der dem zweiten Schenkel (30) benachbart ist, eine geringere Dicke aufweist als der andere erste Arm (23) der beiden ersten Arme (23, 25).

15. Fahrzeugaufhängung (100) mit einer Aufhängungsgabel (10) nach einem der vorhergehenden Ansprüche, einem Dämpfer (40), der an dem Befestigungsabschnitt (11) der Aufhängungsgabel (10) angebracht ist, einem Steuerarm (50), der an den beiden Schenkeln (20, 30) der Aufhängungsgabel (10) angebracht ist, und einer Antriebswelle (60), die sich in der Länge durch den Zwischenraum (18) zwischen den beiden Schenkeln (20, 30) erstreckt.

## Revendications

1. Fourche de suspension (10) pour une suspension de véhicule (100), la fourche de suspension (10) comprenant :
- une partie de fixation (11) configurée pour être fixée à un amortisseur (40) de la suspension du véhicule (100),
- une première jambe (20), la première jambe (20) ayant une première extrémité (21) fixée à la partie de fixation (11) et une deuxième extrémité (22) configurée pour être fixée à un bras de commande (50) de la suspension du véhicule (100), et
- une deuxième jambe (30), la deuxième jambe (30) ayant une première extrémité (31) configurée pour être fixée de manière amovible à la partie de fixation (11) et une deuxième extrémité (36) configurée pour être fixée de manière amovible au bras de commande (50),
la première jambe (20) et la seconde jambe (30) étant espacées l'une de l'autre pour permettre l'insertion d'un arbre d'entraînement (60) de la suspension du véhicule (100) à travers un espace (18) formé entre les deux jambes (20, 30).

2. La fourche de suspension (10) selon la revendication 1, la deuxième jambe (30) étant configurée pour être fixée de manière amovible à la partie d'attache (11) au moyen d'un premier trou traversant (14) de la partie d'attache (11) et d'une première vis (16) configurée pour être fixée à l'intérieur du premier trou traversant (14).

3. La fourche de suspension (10) selon la revendication 2, la première extrémité (31) de la deuxième jambe (30) comprenant deux deuxièmes bras (32, 34), les deuxièmes bras (32, 34) étant espacés l'un de l'autre et présentant chacun un deuxième trou de passage (33, 35) pour l'insertion de la première vis (16) à travers celui-ci.

4. La fourche de suspension (10) selon la revendication 3, la partie de fixation (11) comprenant un premier renflement (13) ayant le premier trou de passage (14), le premier renflement (13) étant configuré pour être inséré dans l'espace entre les deux seconds bras (32, 34).

5. La fourche de suspension (10) selon l'une quelconque des revendications précédentes, la partie de fixation (11) comprenant une pince (12) pour l'amortisseur (40).

6. La fourche de suspension (10) selon l'une quelconque des revendications 2 à 4 et selon la revendication 5, le collier (12) étant configuré pour être serré lorsque la première vis (16) est fixée à l'intérieur du premier trou traversant (14).

7. La fourche de suspension (10) selon l'une quelconque des revendications précédentes, la première jambe (20) étant fixée de manière permanente à la partie d'attache (11).

8. La fourche suspendue (10) selon l'une quelconque des revendications précédentes, chacune des secondes extrémités (22, 36) des deux jambes (20, 30) comportant un troisième trou traversant (24, 26, 37) pour fixer les deux jambes (20, 30) à leurs secondes extrémités (22, 36) au bras de commande (50) au moyen d'une seconde vis (17).

9. La fourche de suspension (10) selon la revendication 8, la deuxième extrémité (36) de la deuxième jambe (30) présentant un deuxième renflement (38) à travers lequel s'étend son troisième trou traversant (37).

10. La fourche de suspension (10) selon l'une quelconque des revendications précédentes, la deuxième extrémité (22) de la première jambe (20) comprenant deux premières branches (23, 25) espacées l'une de l'autre.

11. La fourche de suspension (10) selon la revendication 10, la deuxième extrémité (22) de la première jambe (20) ayant un profil en forme de h formé par les premiers bras (23, 25).

12. La fourche de suspension (10) selon la revendication 10 ou 11, l'espace entre les deux premiers bras (23, 25) étant conçu pour que le bras de commande (50) soit configuré pour être inséré entre les deux premiers bras (23, 25).

13. La fourche suspendue (10) selon l'une quelconque des revendications 10 à 12, la seconde extrémité (36) de la seconde jambe (30) étant située à proximité de l'un des deux premiers bras (23, 25) lorsque la seconde jambe (30) est fixée au bras de commande (50).

14. La fourche de suspension (10) selon l'une quelconque des revendications 10 à 13, un premier bras (25) des deux premiers bras (23, 25) étant situé à proximité de la deuxième jambe (30) étant d'épaisseur inférieure à l'autre premier bras (23) des deux premiers bras (23, 25).

15. Suspension de véhicule (100) comprenant une fourche de suspension (10) selon l'une quelconque des revendications précédentes, un amortisseur (40) fixé à la partie de fixation (11) de la fourche de suspension (10), un bras de commande (50) fixé aux deux jambes (20, 30) de la fourche de suspension (10) et un arbre d'entraînement (60) s'étendant en longueur à travers l'espace (18) entre les deux branches (20, 30).
